(19) Europäisches Patentamt

European Patent Office

Office européen des brevets

(11) **EP 1 418 765 A1**

(12) **EUROPEAN PATENT APPLICATION**

(43) Date of publication:
**12.05.2004 Bulletin 2004/20**

(51) Int Cl.⁷: **H04N 9/31**, G02B 19/00, G02F 1/13357B

(21) Application number: **02024962.9**

(22) Date of filing: **07.11.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **Sony International (Europe) GmbH**<br>**10785 Berlin (DE)** | (72) Inventors:<br>• **Teijido, Juan Manuel,**<br>  **Adv. Tech. Center Stuttgart**<br>  **Heinrich-Hertz-Strasse 1 70327 Stuttgart (DE)**<br>• **Ludley, Frederic, Adv. Tech. Center Stuttgart**<br>  **Heinrich-Hertz-Strasse 1 70327 Stuttgart (DE)**<br><br>(74) Representative: **Müller - Hoffmann & Partner**<br>  **Patentanwälte,**<br>  **Innere Wiener Strasse 17**<br>  **81667 München (DE)** |

(54) **Illumination arrangement for a projection system**

(57)     An illumination arrangement (1) for a projection system is proposed comprising a light source device (10) and a light collecting, integrating and redirecting device (20). The light source device (10) comprises one solid state light source device (30). The light collecting, integrating and redirecting device (20) comprises at least one light integrating device (50), which is adapted to directly receive and to integrate at least a part of primary illumination light (L1) generated by and emitted from at least one associated of at least one solid state light source device (30).

Fig. 1

EP 1 418 765 A1

**Description**

The present invention relates to an illumination arrangement, in particular for a projection system, or the like, and more particular to an illumination arrangement for a projection system which employs solid state light sources.

Nowadays, in many electronic appliances display devices are necessary for displaying information to a user or an audience. Because of the large variety of different types of electronic appliances having such a display device it became necessary to develop display devices for which only a limited space and/or a limited power consumption are available. Therefore, the idea of involving an array of light emitting diodes (LED) came up, but it was realized at the same time that known and state of the art light emitting diodes have only a very limited light output capability. Additionally, the coupling of the generated primary illumination light emitted by a known light emitting diode to the projection objects appeared to be rather complicated, as every single light emitting diode has to be coupled to the projection optics by using independent optical fibres.

It is an object of the present invention to provide an illumination arrangement, in particular for a projection system, which is capable of using solid state light source devices having only low light output capabilities and which at the same time enables an easy and reliable optical coupling of the primary illumination light from the solid state light source device to projection optics.

The object is achieved by an illumination arrangement according to claim 1. Preferred embodiments of the inventive illumination arrangement are within the scope of the dependent subclaims.

The illumination arrangement according to the present invention is adapted for a projection system, or the like, and comprises a light source device and a light collecting, integrating and redirecting device. The light source device is adapted for generating and for emitting primary illumination light. The light collecting, integrating and redirecting device is adapted for receiving at least a part of said primary illumination light from said light source device in a direct manner. The light collecting, integrating and redirecting device is further adapted to redirect said received primary illumination light so as to obtain directed primary illumination light. Additionally, said light collecting, integrating and redirecting device is adapted for outputting said redirected primary illumination light or a derivative thereof as secondary illumination light. According to the present invention, said light source device is or at least comprises at least one solid state light source device. Said light collecting, integrating and redirecting device comprises at least one light valve device which is adapted for receiving said redirected primary illumination light and for outputting said secondary illumination light in a controllable manner. Further, said light collecting, integrating and redirecting device comprises at least one light integrating device being adapted for directly receiving and for integrating at least a part of said primary illumination light generated by and emitted from at least one associated of said at least one solid state light source devices and for outputting said redirected primary illumination light or a derivative thereof.

It is therefore a basic idea of the present invention to use at least one solid state light source device as said light source device. It is a further basic idea of the present invention to have at least one light integrating device which is adapted for directly receiving and for integrating at least a part of said primary illumination light. Therefore, in contrast to prior art systems which use for instance LED devices together with a multiplicity of interposed fibre optical elements to collect and redirect the received output light from the LED devices, solid state light source devices can be used and coupled in an easy and reliable manner.

There are several possibilities of realizations for said solid state light source devices. First of all, it is preferred to have the solid state light source device comprised of a single or-of a plurality of solid state light sources.

If a plurality of solid state light sources is involved said plurality may be built-up by or may comprise an array of solid state light sources.

It is of particular advantage to involve different kinds of solid state light sources, in particular if each of which is adapted for generating and for emitting radiation or light of distinct spectral ranges or colours. In this case, they may be in particular organized in distinct groups, wherein in particular each group is then capable of producing radiation or light of a given spectral range or colour.

According to a further advantageous embodiment of the inventive illumination arrangement each of said solid state light sources is a single light emitting diode (LED) or a multiplicity of light emitting diodes. Also edge-emitting LEDs (EELED) or pluralities thereof can be used.

Alternatively or additionally, each of said solid state light sources is a single vertical cavity surface emitting laser device (VCSEL) and/or a laser diode (LD) or a multiplicity of vertical cavity surface emitting laser devices and/or laser diodes (LD).

Alternatively or additionally, each of said solid state light sources is a single resonant cavity light emitting diode (RCLED) or a plurality of resonant cavity light-emitting diodes.

To allow most of the primary illumination light generated and emitted by the light source device to be used and to be optically coupled to projection optics and to avoid primary illumination light to escape from the location of its generation without being collected it is also proposed that said light integrating device and said at least one associated solid state light source device are disposed in closed spatial proximity or relationship to each other.

It is in particular suggested that said light integrating device and said at least one associated solid state light source device are disposed in direct mechanical contact to each other.

In contrast, the collecting property of the light integrating device can be increased if according to a further preferred embodiment said light integrating device and said at least one associated solid state light source device are adapted to have a gap structure between them, in particular an air gap, an evacuated gap, the gap width of which being small in particular compared to the cross-sections of the light integrating device and/or said at least one associated solid state light source device.

According to this measure and in accordance to the refraction law of Snellius even more light generated and emitted by the associated solid state light source device can be collected and integrated by said light integrating device.

To further increase the light transmission from the associated solid state light source devices to the associated light integrating devices it is proposed in accordance to a further preferred embodiment of the present invention that said light integrating device has a light incidence aperture, that said associated solid state light source device has a light emitting aperture, and that said light emitting aperture is less than or equal to said light incidence aperture with respect to their diameter or cross-section area. According to this particular measure the cross-section or the area of the light incidence aperture of the light integrating device gets the best illumination with respect to the primary illumination light generated by and emitting from the associated solid state light source device.

There are different possibilities of building-up said light integrating device. First of all said light integrating device may be a light pipe, an integrator rod, and/or the like.

Said light integrating device may be a solid rod, made in particular of plastic, glass, or an other optical transparent material.

Alternatively, said light integrating device may be built-up as a hollow tube device or tube element having reflecting or mirrored inner walls or side faces.

According to the above-mentioned measures, said light integrating device acts as a light guide for the received primary illumination light.

Advantageously, said light integrating device has a square, rectangular, hexagonal or equilateral triangular cross-section to obtain a uniform distribution. Oval or circular cross-sections are also possible if there are uniformity restrictions possible.

Additionally or alternatively, said light integrating device may be built-up as a light mixing device, in particular as a beam splitter device, a colour cube device, and/or the like.

In this case said light integrating device may have a plurality of light incidence apertures and at least one light output aperture.

According to this measure it is possible to use said light integrating device as an input stage for the primary illumination light of different and separated solid state light source devices, the primary illumination light of which entering different light incidence apertures and the mixing light leaving the light integration device after being mixed within said light integrating device and exiting the light integrating device from said light output aperture.

Of course, different light integrating devices can be combined with each other so as to combine and integrate and redirect primary illumination light stemming from different and spatially separated different solid state light source devices to yield a secondary illumination light having best illumination and projection properties.

In the following these and further aspects of the present invention will be more elucidated:

Solid state light sources (SSLS) present a number of advantages for rear- and front-projector engines when compared with traditionally used high pressure lamps. In particular, SSLSs allow colour management at the source level; they allow a better colour saturation, and they have a much longer lifetime. Moreover, SSLSs allow the design of new light engine architectures leading to more compact and potentially cheaper devices.

The improvement of the lumen output, e. g. of light emitting diodes (LEDs), make them a natural tentative candidate to be used in projectors. As the light emitted by a single LED is not sufficient for some projector applications, the idea of collecting the light emitted by an array of LEDs and in redirecting it through the light valve came up. If the LED array covers a surface greater than the panel surface, light pipes commonly are used to collect the light of each individual LED. This approach requires a precise and costly assembly.

Instead, it is proposed to optimise the design of the illumination engine based on today and incoming solid state light source technology based e. g. on optimised light source configurations combined with an integration rod.

The problem of common projectors using solid state light sources is the limited brightness or lumen output reaching the screen. The brightness depends on the source throughput, the directivity of emission of the source and the optical efficiency of the projector engine.

As types of solid state light sources light emitting diodes (LED), edge-emitting light-emitting diodes (EELED) resonant cavity light emitting diodes (RCLED), laser diodes (LD), and vertical cavity surface emitting lasers VCSEL are suggested.

The limitations of available LEDs are the limited throughput and the non-directive emission according to the Lambertian emission law.

VCSEL and RCLED have the big advantage to have a very directive emission. The limitations of available VCSEL and RCLED are e. g. that commercially available VCSEL and RCLED and lab samples of visible VCSEL and RCLED are not powerful enough, and are only available for red and blue.

LD's have the big advantage of a very directive emission. The limitation of available LDs is that commercially available LDs are powerful enough in red only.

The invention proposes e. g. projector engine designs which optimise the use of LEDs of today technology as well as the use of VCSELs and RCLEDs as well as LDs. Moreover, some of the proposed designs are extremely compact and will allow the realization of embedded projectors, which is impossible with today technology.

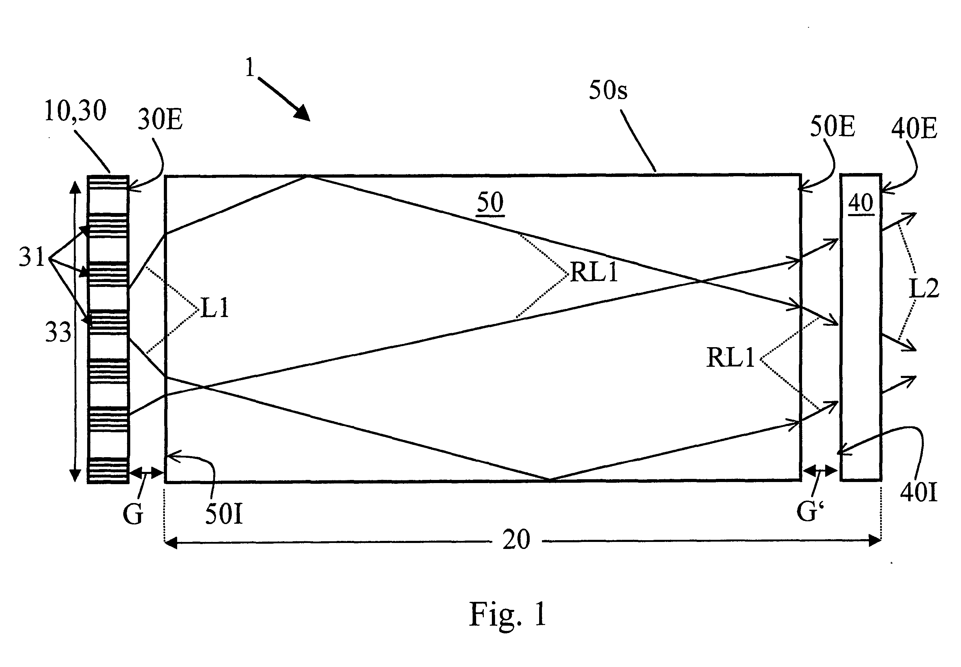

A first proposed approach consists in using LED arrays whose overall surface is smaller or equal to that of the light valve. In this case the light is guided onto the light valve by a single and simple light pipe, whose role also consists in making uniform the light distribution as shown in Fig. 1. The light pipe, also called integrator rod, can either be a solid glass or plastic rod or a hollow mirrored tube e. g. with a rectangular cross section. For a good coupling efficiency, an air gap is required between the LED array and the light pipe, and between the light pipe and the light valve. To avoid that too much light escapes laterally, this air gap should be kept as small as possible. The simplicity of the design is based on the matching of the light pipe and the light valve cross sections. Thus the light valve is uniformly illuminated by light coming out from the light pipe. The cross section of the LED array has to be smaller or equal to the cross section of the light valve.

Beside marginal losses produced by Fresnel reflection at the light pipe extremities, all the light emitted by the LED array is directed onto the light valve. At this point, the light has to go through the light valve and the projection optics before reaching the projection screen. Both the light valve and the projection optics have a limited angle of acceptance or aperture. This means that only the light included within a given cone of acceptance is going to reach the screen, the rest being lost.

The aperture of the projector is determined by the F/number of the projection optics, typically F/3 (half cone angle of 10°) for reflective light valve and F/2 (half cone angle of 15°) for transmissive light valves. This means that at the light valve plane, all the light which is not within the cone of acceptance is lost.

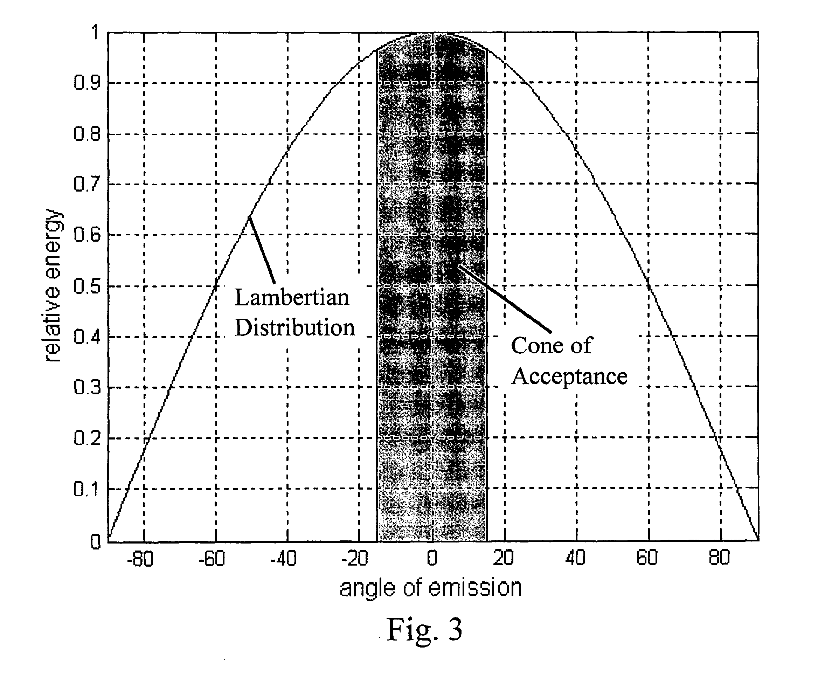

LEDs, without complementary optics, emit light vs. a Lambertian distribution. When the light reaches the projection optics, only the proportion of light within the cone of acceptance is going to reach the screen. As shown in Fig. 3, only small part of the emitted energy (3,0% for F/3 and 6,7% for F/2) is included within the acceptance cone.

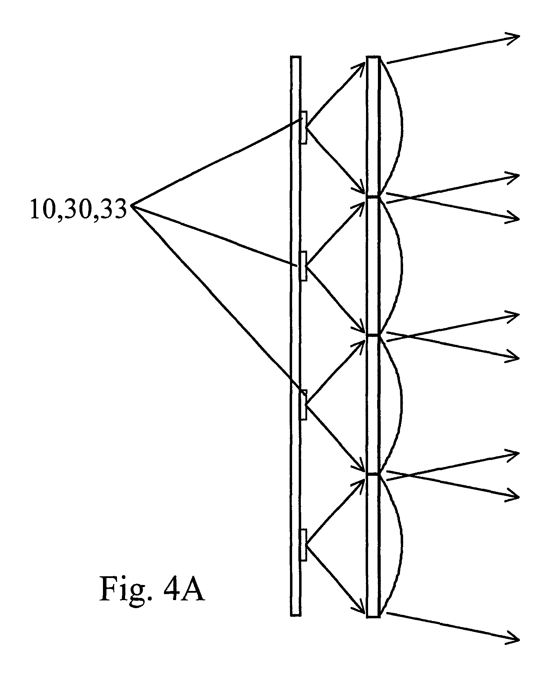

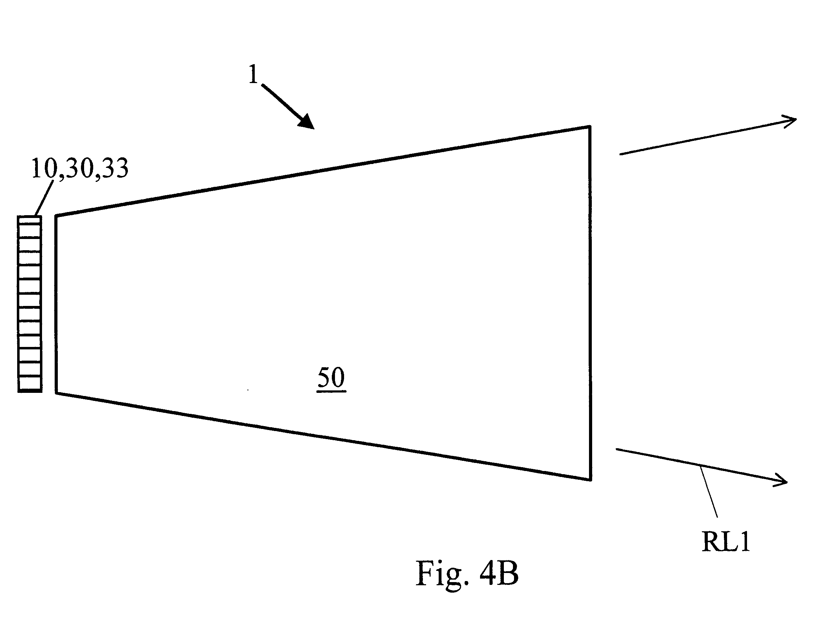

The optics between the LED array and the light valve can redirect the rays within the cone of acceptance, increasing the efficiency of the device. This can be done either, by using collimation micro-lenses in front of the LED array as shown in Fig. 4A, or by using a pyramidal integration rod according to Fig. 4B. In both cases however, the active emitting surface is considerably smaller than the light valve surface. In other words, the efficiency of the illumination engine can be improved by using collimation optics, but at the cost of the light throughput of the LED array because of a diminution of the emitting surface.

Overall the limited (but improving) throughput of the Lambertian emitting LED arrays limit their use to low lumen output projectors requiring, e. g. in rear-projection TV.

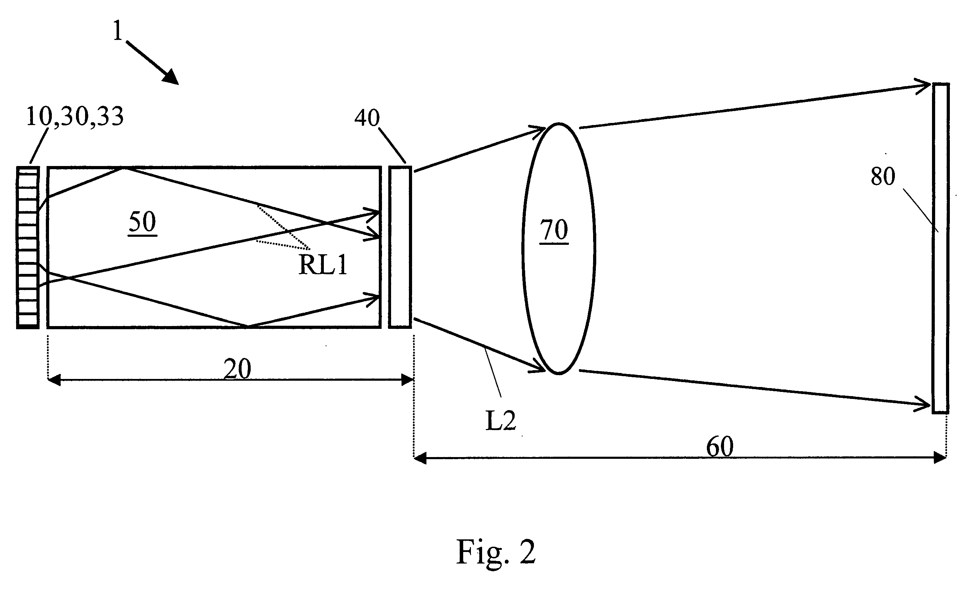

Vertical cavity surface emitting lasers (VCSEL) have the interesting property that they emit light within a cone of typically beam divergence of ±8° which is smaller than the cone of acceptance of the projection optics. Therefore, beside the losses of each individual optical element, all the energy emitted by a VCSEL array would reach the screen. As shown in Fig. 2, the VCSEL array can have the exact cross-section of the light valve. The intermediate optics, i. e. the integration rod, is only used as light distribution uniformiser and has no collimation functionality. The integration rod also eliminates any coherent property of the VCSEL, i. e. speckle.

Laser diodes have astigmatic emission, i.e. they do not need to be collimated in one axis (like VCSELs), but require collimation in the other axis. Asymmetric light pipes are therefore used.

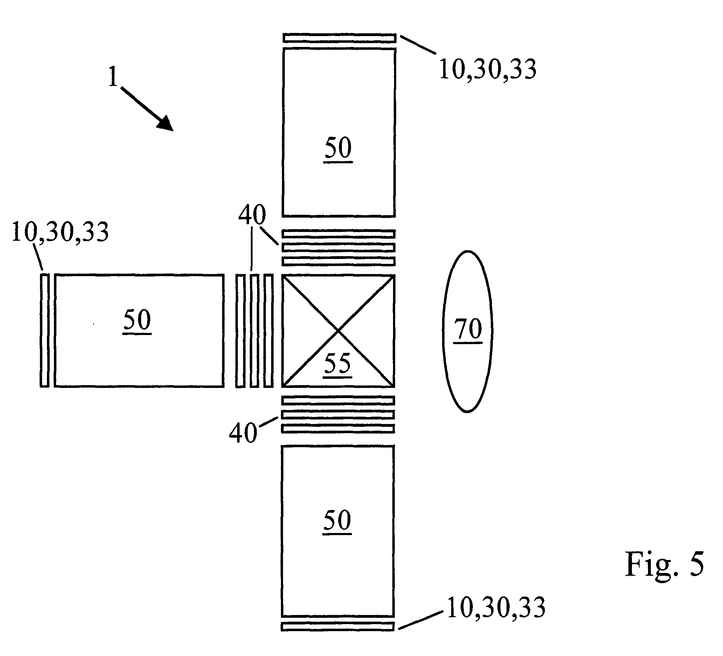

Figure 5 illustrates the architecture of a three-colour-path transmissive projector based on solid state light sources either LED array of VCSEL array and/or RCLED array. The imaging optics light valve and projection lens can be the same as those of a high-pressure lamp projector. However, the illumination engine is simplified and more compact, no fly-eye lens, no relay lenses are involved.

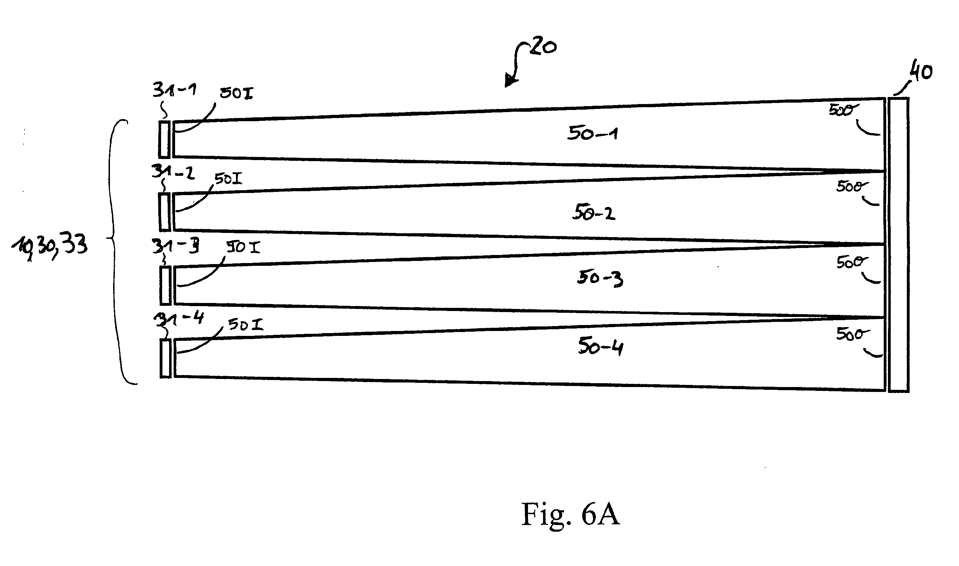

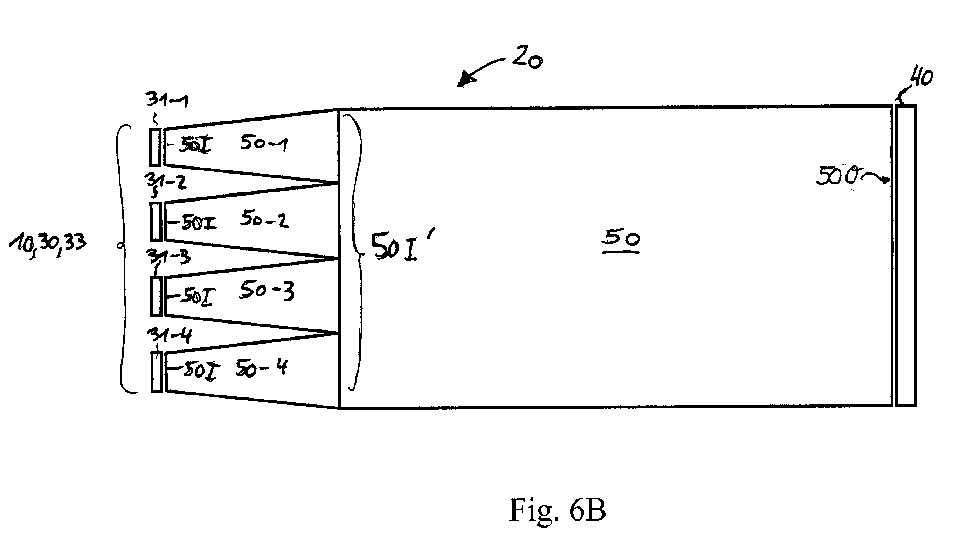

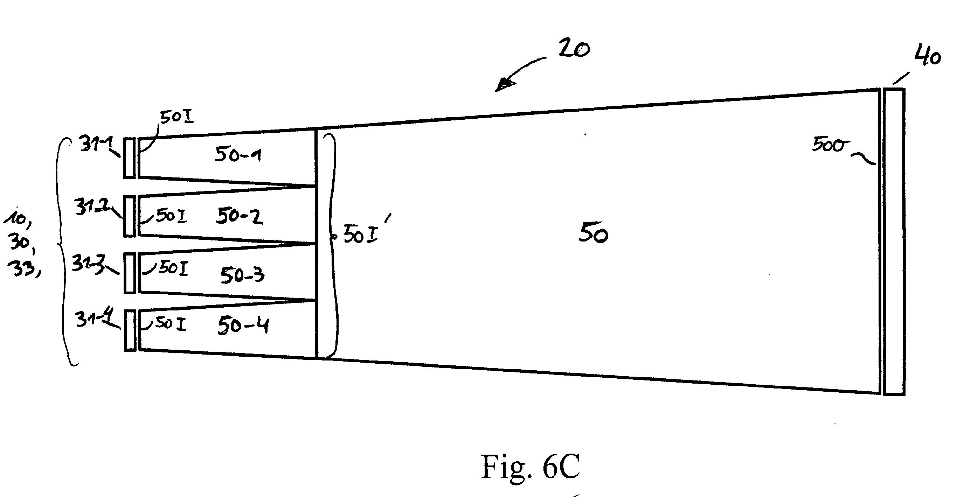

The architecture of a hybrid projector, using high-pressure lamp for the green and blue channels and a solid state light source for the red channel, is schematically shown in Fig. 6. The goal of this configuration is to boosts the throughput of the red channel, which is relatively weak in standard HP lamp projectors (limitation due to the emission spectrum of high-pressure lamps). It should be noted that the more efficient visible solid state light source are available in the red.

Solid state light sources can also be used in sequential colour projectors. The advantage over HP lamp sequential projectors is that colour management can be done directly at the source level, i. e. no colour filter for colour separation is needed. The colour selection is made electronically by switching on and off the different light sources.

Very compact architectures can be achieved when using back-lighting illumination light pipes. The illumination light pipes have a similar design to those used for the back-lighting of T-LCD displays, typically used in laptops an cell phones. The light is guided inside the light pipe by total internal reflection and is selectively out-coupled from the light pipe by scattering zones placed along the light pipe surface. These compact projectors can be embedded into portable devices such as UMTS cell phones, camcorders, palmtops, or the like.

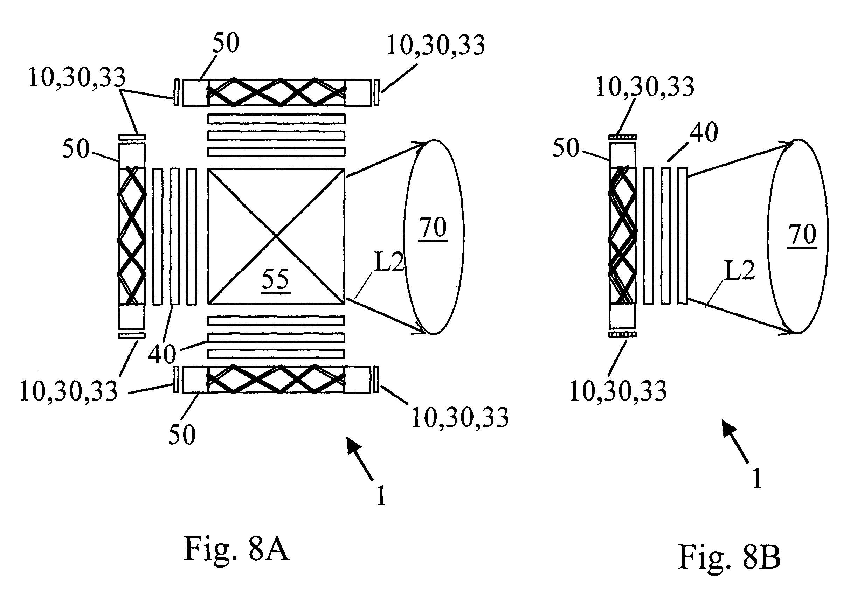

What distinguish configurations of Figs. 6, 7 and 8 is the place available for the sources, i. e. for the emission surface, and therefore the resulting lumen throughput of the projector. The extremely reduced space available for the sources in Fig. 8 configurations implies the use of a highly efficient light sources, like VCSEL arrays and/or RCLED arrays.

Configurations based on reflective light valves can also be built around solid state light sources. Nevertheless, the integration rod cannot be placed in close contact with the light valve, as the light should escape through the projection lens. In other words, some kind of beam splitter is needed in front of the light valve. The uniform distribution of light coming out of the integration rod has to be projected by some relay optics on the light valve. Basically all the standard reflective projector configurations based on integration rods can be adapted in order to use solid state light sources.

These reflective configurations are not as compact as the proposals based on transmission light valves. On the other hand there is space to place some kind of polarization recycler between the integration rod and the light valve. The same remark applies to traditional transmission configurations which make use of integration rod, relay optics and polarization recycler. They can also be adapted in order to make use of solid state light sources.

When compared with traditional high pressure lamp projectors the invention offers the following advantages:

- Better colour saturation and larger colour gamut

- Colour management at the source level

  → no need of colour filters
  → electronic sequential colour management
  → possibility of dynamic contrast adjustment.

- Much increased lifetime of the source

- No infrared emission on the optical path (cold light source)

  → possibility to use low cost plastic optics

- Possibility to improve the red channel of current three-colour-path projectors.

When compared with other proposed LED projectors the invention offers the following advantages:

- Simpler design based on integration rod in close contact with the source panel and the light valve (no fly-eye lens, no relay optics)

- Optimised LED-to-light-valve coupling efficiency

- Use of directive emitting VCSELs, RCLEDs, or LDs for much increased optical efficiency

- Ultra compact configurations based on back-lighting light pipes.

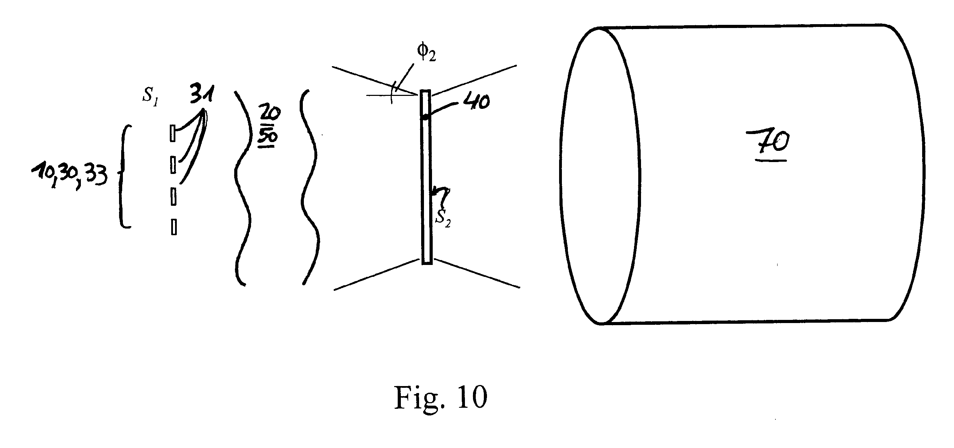

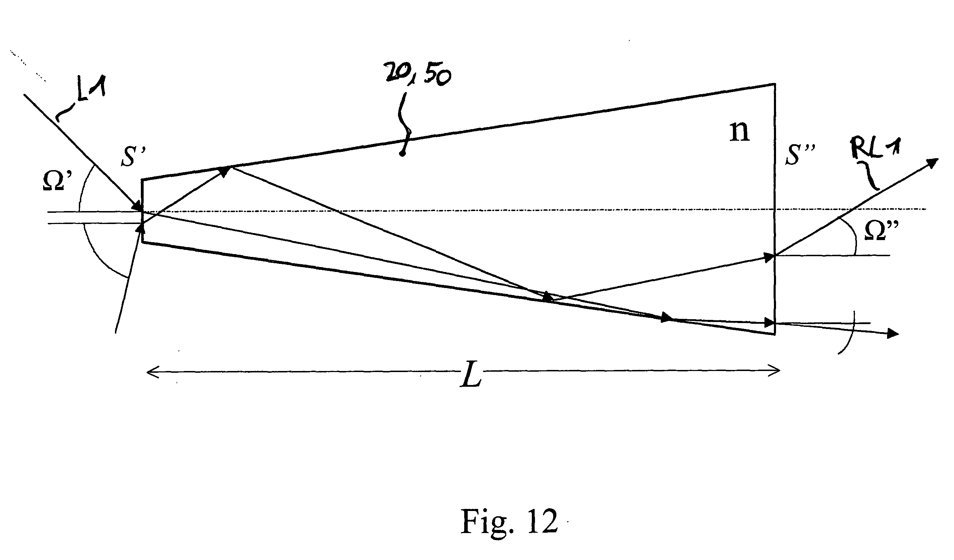

In the following, some further general and theoretical aspects of the inventive concept and its realisations are given taking reference to figures 10 to 12:

One Aspect of the present invention and its embodiments is to solve the problem of finding a configuration which maximizes the illumination of a surface using an array of LEDs. Moreover, the illumination of the surface needs to be uniform and the direction of the rays kept within a limited aperture. The aperture or the angle of acceptance is determined by the numerical aperture of the imaging optics. The difficulty of the task comes from the fact that the angle of acceptance is generally small when compared to the large angular emission of the LEDs, having e.g. typically a Lambertian distribution.

An illuminated surface may be, for example, the probe plane of a microscope, or the light valve plane of a projector. The imaging optics are in these cases the microscope objective or the projector objective.

The constant improvement of the lumen output of light emitting diodes or LEDs make them natural candidates to be used as illumination light sources for automotive and building lighting. Other application like microscopy and projection display are more demanding as the surface to illuminate is relatively small, it has to be illuminated uniformly and within the angle of acceptance or aperture of the optics. The light source may either be formed by a single LED, or preferably by an LED array when the required brightness is high.

For LED arrays, it has been proposed to achieve the light collection using light pipes or fibers. The uniformity is usually achieved using an integration rod. In order to collimate the light within the aperture of the optics, an imaging optics is used to image the exit surface of the rod onto the plane to illuminate.

Our inventive proposal consists of a simpler - therefore cheaper - and more energy efficient approach, as the pyramid light pipes fulfill three functions of light collection, light integration, and light collimation.

One problem of illumination devices using LEDs is the goal to illuminate a plane uniformly with maximum light power and within a limited aperture of the optics. In other words,

1. maximization of the collection efficiency or the capture of light emitted by the LEDs,
2. maximization of the collimation efficiency or the directing of light with the aperture of the given optics, and
3. maximization of the light engine efficiency or the minimization of the optical losses of the components

have to be achieved and are achieved by the present invention.

By using a single component from the solid state light source 30 or LED array 33 to the illuminated plane, the proposed approach minimizes the optical losses, lowers the manufacturing costs, and simplifies the device assembly.

The problem which is illustrated in Fig. 10, consists of finding a configuration which maximizes the illumination of a surface using an solid state light sources or array 33 of LEDs 31. Moreover the illumination has to be uniform and the direction of the rays kept within a limited aperture.

The illuminated surface $S_2$ may be, for example, the probe plane of a microscope, or the plane of a light valve 40 of a projector. The maximal aperture of the illumination rays is then defined by the numerical aperture of the microscope objective or the F-number of the projector objective 70.

The collimation optics has to fulfil three roles : light collector, light uniformizer, light collimator. These functions can be fulfilled by the combination of different types of elements.

The difficulty of the task stems inter alia from the non-directive radiation pattern emitted by the LEDs 31, which is e.g. typically a Lambertian distribution. This light needs to be redirected onto the limited surface to illuminate and within the limited aperture of the optics.

Theoretical background

In the following, again reference is taken to figures 10 to 12.

All illumination designs have to take into account the étendue theorem which states that the étendue or optical extent along an optical system cannot be reduced. For a given surface S the étendue E is defined by the surface S multiplied by the solid angle $\Omega$ sustaining the light rays, i.e.

$$E = S \cdot \Omega, \tag{1}$$

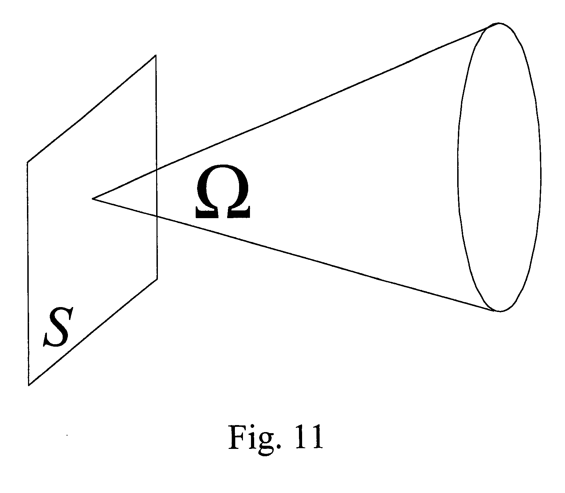

according to Fig. 11 for Definition of the étendue E.

In the general system illustrated in Fig. 10, the maximal useful étendue $E_2$ is defined by the surface $S_2$ to illuminate and the solid angle $\Omega_2$. For instance, if for the étendue $E_1$ of the source the relation $E_1 > E_2$ holds, then part of the light is lost.

The solid angle $\Omega_2$ is function of the aperture of the optics and is given by the equation

$$\Omega_2 = 2\pi \cdot (1 - \cos\varphi_2) = 4\pi \cdot \sin^2\left(\frac{\varphi_2}{2}\right), \tag{2}$$

where $\varphi_2$ is the half angle of the cone of aperture.

The étendue $E_1$ of the LED array is defined as

$$E_1 = \Omega_1 \cdot \sum_{i=1}^{N} S_{1i} = 2\pi \cdot S_1, \tag{3}$$

where $S_{11}$ is the emission surface of each individual LED, N is the number of LEDs in the array, and $2\pi$ is the solid angle of the hemisphere corresponding to the Lambertian emission.

100% collimation efficiency system

The étendue theorem states that the étendue along an optical system cannot be reduced. Therefore, in order to achieve an optical system with a 100 % collimation efficiency, the emission surface S, of the LED array cannot exceed $S_{1max}$ as is shown by the following relations

$$E_1 \leq E_2,$$
$$2\pi \cdot S_1 \leq 4\pi \cdot \sin^2\left(\frac{\varphi_2}{2}\right) \cdot S_2 \text{ , and} \tag{4}$$
$$S_1 \leq S_{1\max} = 2 \cdot \sin^2\left(\frac{\varphi_2}{2}\right) \cdot S_2 \text{ .}$$

System with limited collimation efficiency

If for the surface of emission the relation $S_1 \geq S_{1max}$ holds, part of the emitted light will not reach the surface $S_2$ within the aperture $\varphi_2$, and will therefore be lost.

The problem is analysed by looking at what is the emitted cone or half-angle $\varphi_1$ at the surface $S_1$ which is within the aperture of the optics or half-angle $\varphi_2$ at the surface $S_1$.

From the étendue theorem it follows that

$$S_1 \cdot 4\pi \cdot \sin^2\left(\frac{\varphi_1}{2}\right) = S_2 \cdot 4\pi \cdot \sin^2\left(\frac{\varphi_2}{2}\right)$$

is fulfilled. Therefore,

$$\varphi_1 = 2 \cdot \sin^{-1}\left[\sqrt{\frac{S_2}{S_1}} \cdot \sin\left(\frac{\varphi_2}{2}\right)\right] \tag{5}$$

is also fulfilled.

The coupling efficiency $\eta_c$ is defined as the ratio of the emitted energy $W_1$ within the cone defined by $\varphi_1$, and the total energy W emitted by the source or surface $S_1$, i.e.:

$$\eta_c = \frac{W_1}{W}. \tag{6}$$

In the case of a Lambertian light source with an emission angle $\gamma = \pi/2$, the coupling efficiency becomes

$$\eta_c = \frac{\int\limits_{-\varphi_1}^{+\varphi_1}\int\limits_{-\varphi_1}^{+\varphi_1}\cos(\alpha)\cos(\beta)\cdot d\alpha\cdot d\beta}{\int\limits_{-\pi/2}^{+\pi/2}\int\limits_{-\pi/2}^{+\pi/2}\cos(\alpha)\cos(\beta)\cdot d\alpha\cdot d\beta} = \sin^2\varphi_1 \ . \qquad (7)$$

The luminous flux $W_2$ reaching the surface $S_2$ within the aperture $\varphi_2$ is proportional to the emission surface $S_1$ of the source and to the collimation efficiency $\eta_c$,

$$W_2 \propto \eta_c \cdot S_1. \qquad (8)$$

Three cases can be distinguished:

1) $S_1 \leq S_{1max}$ and $\eta_c = 1$, all the light emitted by the source can be used: $W_2 \propto S_1$,

2) $S_2 \geq S_1 > S_{1max}$ and $\eta_c < 1$, part of the light is lost, but as the surface of emission $S_1$ increases, $W_2$ increases, and

3) $S_2 > S_1$, the surface of emission $S_1$ increases, but $W_2$ does not increase.

Proposed solution and features

Different solutions based on reflectors and/or refractive lenses have been proposed for the collimation of LEDs. The drawback of these known approaches is that it is difficult to collect 100% of the light in the desired direction. Moreover the optics surrounding the LED is cumbersome, artificially increasing the étendue of the source. In addition, further optics is needed to make the illumination uniform, e.g. fly-eye lenses or an integration rod.

According to the present invention an approach based on - in particular pyramidal shaped - integration rods is proposed. This approach fulfils the three needed functions of

- collecting the light emitted by the LED array,
- collimating within the aperture of the optics, and
- homogenising the illumination.

The working principle of a pyramidal integration rod or PIR is illustrated in Fig. 5. The PIR has an entry surface S', an exit surface S", and length L. The PIR can be an empty tube whose internal faces are mirrors, or a plain transparent material - e.g. mineral glass, plastic or the like - of index n. For a plain PIR, the rays are reflected on the surface by total internal reflection or TIR. As is illustrated for two rays in Fig. 5, the angle with respect to the PIR surfaces normal is smaller at the exit of the pipe than at its entrance. Given the étendue theorem, the collimation is defined as

$$\Omega'' = \frac{S'}{S''}\cdot \Omega'. \qquad (9)$$

where $\Omega'$ is the solid angle of the ray before the PIR, and $\Omega''$ is the solid angle of the ray after the PIR. The relations S">S' and $\Omega''<\Omega'$ are fulfilled.

As for a normal integration rod, the rays are mixed within the rod. Two condition have to be fulfilled in order to get an uniform distribution at the PIR exit surface:

1. The PIR cross-section has either to be square, rectangular, equilateral triangular, or hexagonal.

2. The PIR has to be long enough to allow enough reflections against the PIR surface.

The theoretical collimation efficiency $\eta_c$ is achieved for $L \geq L_c$. Above the length $L_c$ the collimation efficiency is constant. $L_c$ is determined experimentally or by ray-tracing simulation, in a case by case basis.

In problem described above, the PIR entry surface S' has to coincide with the LED emission surface $S_1$, and

the PIR exit surface S" has to coincide with the surface $S_2$ to illuminate. As the LED array is constituted by a set small emission surfaces $S_{11}$, a micro PIR is placed in front of each LED. The light is then collected by a bigger PIR or integration rod. The three systems illustrated in Fig. 6 are all equivalent, given the length of the PIR is long enough to complete the collimation and the homogenisation.

Note that for a better coupling efficiency, an air gap is left between each LED and the PIR surface.

Main advantageous features of the present invention are the usage of a single optical element is used for light collection, light collimation, and light homogenisation. By using a single component from the light source (LED array) to the illuminated plane, the proposed approach minimizes the optical loses, lowers the manufacturing costs, and simplifies the device assembly.

In the following the invention will be described in more detail taking reference to the accompanying Figures.

**Figs. 1, 2**     illustrate a first preferred embodiment of the inventive illumination arrangement.

**Fig. 3**     shows a graph which illustrates the relative emission of light as a function of the direction angle of emission for a light emitting diode.

**Figs. 4A, B**     show details of further embodiments of the present invention.

**Figs. 5 - 9**     illustrate further embodiments of the present invention for multiple colour applications.

**Figs. 10-12**     illustrate some of the theoretical background.

Fig. 1 demonstrates by means of a schematical and cross-sectional side view a first preferred embodiment of the inventive illumination arrangement 1.

The embodiment of Fig. 1 consists of a light source device 10, which is built-up by a solid state light source device 30. The solid state light source device 30 of the embodiment of Fig. 1 consists of an array 33 of light emitting diodes 31. Said array 33 is formed to have a light emitting area or light emitting aperture 30E from which primary illumination light L1 is emitted to reach an incidence aperture 50I of a light collecting, integrating and redirecting device 20 which may consist as in the example of Fig. 1 of a light integrating device 50 and of a light valve device 40, the former of which is in this case formed as an integration or integrator rod 50 of a solid bulk material, for instance glass, plastic, or the like.

Rays of primary illumination light L1 entering said integrator rod 50 via said light incidence aperture 50I are first of all refracted according to the Snell's law of refraction and according to a refractive index of the material of the integrator rod 50 being larger than the refraction index of the gap material of the gap G between said integrator rod 50 and the light source device 10. During the passage of the primary illumination light rays L1 within the material of the integrator rod 50 said rays of light are reflected at the side walls or faces 50s of the integrator rod 50. Finally, after a plurality or multiplicity of reflections at the side walls 50s each of said received and multiply reflected rays of light of the primary illumination light L1 exits from the integrator rod 50 via output aperture 50E and then enters the light valve 40 being situated in direct proximity to the light output aperture 50E.

After exiting said integrator rod 50 via output aperture 50E, the light distribution in the second gap G' between the integrator rod 50 and the light valve 40 is more uniform than the light distribution at the first gap G between the light source device and the integrator rod 50.

After receiving the redirected primary illumination light RL1 the respective rays of light are allowed to pass through the light valve 40 in a controllable manner and they leave the light valve 40 as secondary illumination light L2 to enter certain projection optics 70, shown in Fig. 2, and then entering a display screen 80.

The gap G between the light source device 10 and the integrator rod 50 which is shown in Figs. 1 and 2 is of particular importance as even in the case of an array of light emitting diodes each of said diodes 31 only has a minor directive emission capability because the light distribution or energy distribution of emitting light waves obeys a Lambertian distribution as shown in Fig. 3. Fig 3 demonstrates this Lambertian distribution as a graph demonstrating the relative energy of emitted light for a light emitting diode 31 as a function of the emission angle. From the distribution of Fig. 3 it can be derived, that it is necessary to keep the gap width of the gap G between the light source device 10 and the integrator rod 50 as narrow as possible to increase the integral or the amount of primary illumination light L1 entering the area of incidence or incidence aperture 50I.

As can be seen from Fig. 2, the cones of acceptance of the integrator rod 50 and the displaying optics 70 may be different. Therefore, it could be necessary to adapt said cones of acceptance. This can be done alternatively by employing fly-eye-optics as shown in Fig. 4A or more preferably by using an integrator rod 50, having a pyramidal cross-section as shown in Fig. 4B.

Figs. 5 to 9 demonstrate different possibilities of combining solid state light source devices 30 of different colours to obtain a multi-colour illumination arrangement for a multi-colour projection system.

In Fig. 5 three different coloured solid state light source devices 30 having e. g. light emitting diode arrays 33 are given, each of said solid state light source devices 30and therefore each of said light emitting diode arrays 33 being associated with an integrator rod 50 interposed between said solid state light source device 30 and a light valve arrangement 40, so that for each of said light source devices 30 of different colours an arrangement similar to that shown in Fig. 1 is given.

To combine the three different colours of said three different solid light source devices 30 a light mixing device 55 or colour cube 55 common for each of said three arrangements is given being capable of receiving the respective secondary illumination light L2, to mix them up, and to allow them to pass over to the projection optics 70.

Fig. 6A to 6C show different embodiments of the light collecting, integrating and redirecting unit or device 20 in the form of different integrator rod arrangements each of which being adapted for an array 33 of LEDs 31 or 31-1 to 31-4 as a light source device 10 and each of which being optically coupled to a light valve device 40.

In Fig. 6A the light collecting, integrating and redirecting unit or device 20 is formed as a plurality of more or less similar or identical separated and parallely arranged single pyramidal integrator rods 50-1 to 50-4 each of which being uniquely assigned and coupled with its respective light entrance section 501 to a given LED 31-1 to 31-4, respectively. The light entrances 501 are in each case smaller than the respective light output sections 500 which are optically coupled to the light entrance section 401 of a common light valve device 40.

In Fig. 6B the more or less similar or identical separated and parallely arranged single pyramidal integrator rods 50-1 to 50-4 are optically coupled instead to the light entrance section 501' of a common and integrator rod 50 the light exit 500 of which being optically coupled to the light entrance section 401 of a common light valve device 40.

The common integrator rod 50 of the embodiment of fig. 6B has a uniform cross section, whereas the cross section of common integrator rod 50 of the embodiment of Fig. 6C is non-uniform and the respective integrator rod 50 is formed pyramidal.

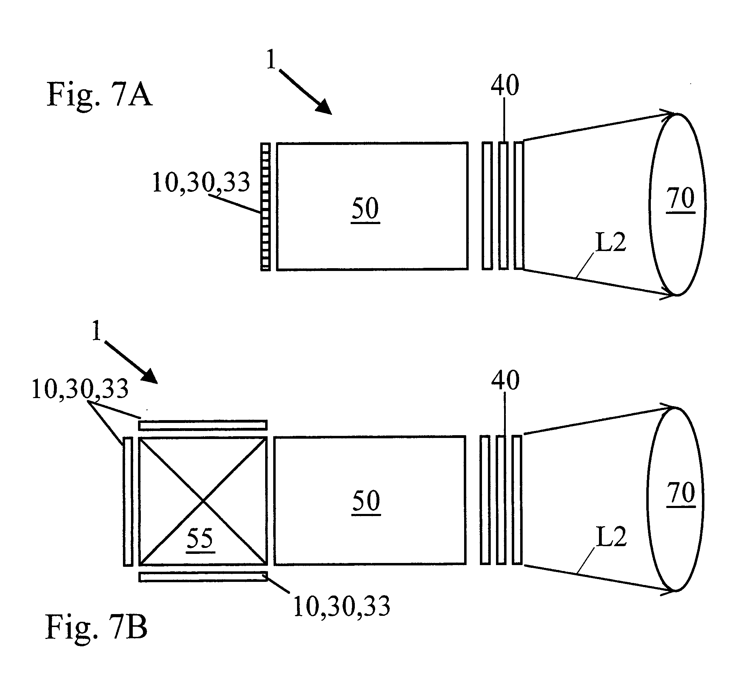

Figs. 7A and 7B demonstrate two different arrangements for realizing multiple colour illumination arrangements for multiple colour projection systems which differ from the embodiment of Fig. 5.

In the embodiment of Fig. 7A a solid state light source device 30 is employed as said light source device 10 which has a LED-array 33, the members of which, i. e. the distinct light emitting diodes 31, possessing different spectral emission ranges, i. e. different colours. After the passage of the primary illumination light L1 through the integrator rod 50 at the gap G' between the light valve 40 and the integrator rod 50, the uniform light distribution and the uniform colour distribution after passing the light valve 40 is then directed to the projection optics 70.

In the case of the embodiment of Fig. 7B three different coloured solid state light source devices 30, each of which being built-up by an array 33 of light emitting diodes 31 have distinct spectral ranges or colours with respect to each other. The primary illumination light L1 of each of said single solid state light source devices 30 is directed to the light mixing device 55 which after mixing directs the output light to the integrator rod 50 to obtain a secondary illumination light L2 at the gap G' between the light valve 40 and the integrator rod 50 having a uniform illumination and colour distribution.

Figs. 8A and 8B demonstrate further examples of multiple colour illumination devices. In these cases illumination light pipes 50 are used for redirecting and making uniform received amounts of primary illumination light L1. In contrast to the embodiments discussed above, where the incidence aperture 501 at which primary illumination light L1 enters the distinct integrator rod 50 and the output aperture 50E are disposed in parallel to each other, the incidence apertures 501 and output apertures 50E of the embodiments of Figs. 8A and 8B are perpendicular to each other. Therefore, primary illumination light L1 emitted by solid state light source devices 30 of the embodiments of Fig. 8A and 8B enters the associated illumination light pipes 50 at their base faces, whereas the redirected primary illumination light RL1 exits from said illumination light pipes 50 at side faces thereof.

A difference between the embodiments of Figs. 8A and 8B is that for obtaining a multi-colour arrangement in Fig. 8A a plurality of single coloured solid state light source devices 30 or LED-arrays 33 is necessary, whereas in the embodiment of Fig. 8B multiple coloured solid state light source devices 30 or LED-arrays 33 are provided.

Of course, in the embodiment of Fig. 8A according to the multiplicity of single-coloured solid state light source devices 30 again a light mixing device 55 is necessary.

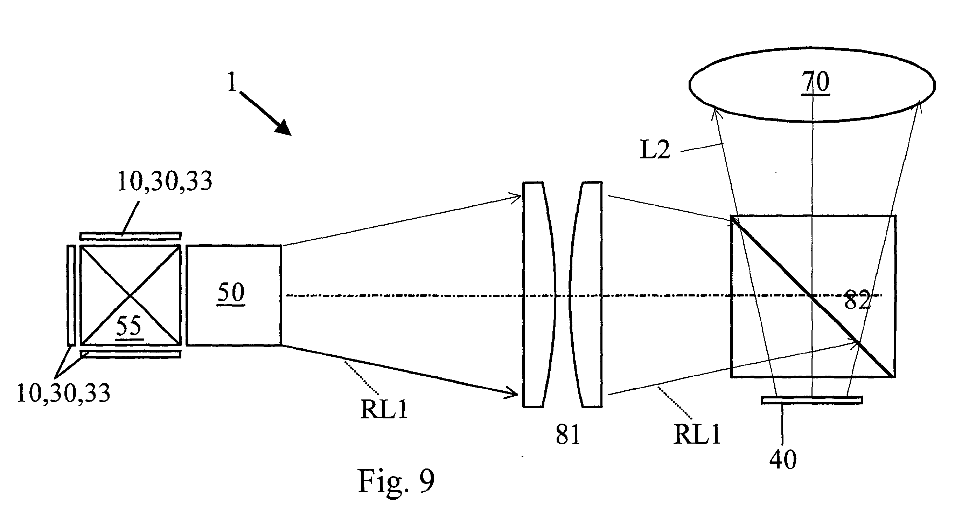

The embodiment of Fig. 9 demonstrates an application of the embodiment of Fig. 7B, having intermediate optics 81, 82 for adapting the cones of acceptance between the integrator rod 50 and the light valve 40. The intermediate optics 81, 82 consists of a lens arrangement 81 and a polarization beam splitter 82 which in combination with each other transforms or maps the cone of acceptance of the integrator rod 50, i. e. the geometry of the redirected primary illumination light RL1, to the cone of acceptance of the light valve 40, which is in the embodiment of Fig. 9 a reflective light valve 40 which allows the passage of secondary illumination light L2 to the projection optics 70 upon reflection at the interface of light valve 40.

**Reference Symbols**

| | |
|---|---|
| 1 | Illumination arrangement |
| 10 | light source devive |
| 20 | light collecting, integrating and redirecting device |
| 30 | solid state light source device |
| 30E | light exit aperture, light output aperture |
| 30I | light incidence aperture, light entrance aperture |
| 30O | light exit aperture, light output aperture |
| 31 | solid state light source, LED |
| 31-1 | solid state light source, LED |
| 31-2 | solid state light source, LED |
| 31-3 | solid state light source, LED |
| 31-4 | solid state light source, LED |
| 32 | solid state light source |
| 33 | array of solid state light sources |
| 40 | light valve device, LCD panel |
| 40E | light exit aperture, light output aperture |
| 40I | light incidence aperture, light entrance aperture |
| 40O | light exit aperture, light output aperture |
| 50 | light integrating device, integrator rod, light pipe |
| 50E | light exit aperture, light output aperture |
| 50E' | light exit aperture, light output aperture |
| 50I | light incidence aperture, light entrance aperture |
| 50I' | light incidence aperture, light entrance aperture |
| 50O | light exit aperture, light output aperture |
| 50s | side wall |
| 50-1 | light integrating device, integrator rod, light pipe |
| 50-2 | light integrating device, integrator rod, light pipe |
| 50-3 | light integrating device, integrator rod, light pipe |
| 50-4 | light integrating device, integrator rod, light pipe |
| 55 | light mixing device, beam splitter device, colour cube device |
| 60 | display optics |
| 70 | projection optics |
| 80 | display, display screen |
| 81 | intermediate optics, lens arrangement |
| 82 | intermediate optics, polarization beam splitter |
| G | gap structure |
| G' | gap structure |
| L1 | primary illumination light |
| L2 | secondary illumination light |
| RL1 | redirected primary illumination light |

**Claims**

1.  Illumination arrangement, in particular for a projection system or the like, comprising:

    -   a light source device (10) being adapted for generating and for emitting primary illumination light (L1) and
    -   a light collecting, integrating and redirecting device (20) being adapted for receiving at least a part of said primary illumination light (L1) from said light source device (10) and for redirecting said received primary illumination light (L1) so as to obtain redirected primary illumination light
    -   (RL1) and for outputting said redirected primary illumination light (RL1 ) or a derivative thereof as secondary illumination light (L2),
    -   wherein said light source device (10) at least comprises at least one solid state light source device (30),
    -   wherein said light collecting, integrating and redirecting device (20) comprises one light valve device (40) being adapted for receiving said redirected primary illumination light (RL1) and for outputting said secondary illumination light (L2) in a controllable manner, and

- wherein said light collecting, integrating and redirecting device (20) comprises at least one light integrating device (50) being adapted for directly receiving and for integrating at least a part of said primary illumination light (L1) generated by and emitted from at least one associated of said at least one solid state light source device (30) and for outputting said redirected primary illumination light (RL1) or a derivative thereof.

2. Illumination arrangement according to claim 1,
   wherein each of said solid state light source devices (30) is or comprises a single or a plurality of solid state light sources (31,32, 33).

3. Illumination arrangement according to claim 2,
   wherein each plurality of said solid state light sources (31, 32, 33) is or comprises an array (33) of solid state light sources (31, 32).

4. Illumination arrangement according to anyone of the claims 2 or 3,
   wherein different kinds of solid state light sources (31, 32, 33) are involved, each of which in particular being adapted for generating and emitting radiation or light of distinct spectral ranges or colours and/or in particular being organized in distinct groups.

5. Illumination arrangement according to anyone of the claims 2 to 4,
   wherein said solid state light source (31, 32, 33) is a single light emitting diode (31) or a multiplicity of light emitting diodes (31).

6. Illumination arrangement according to anyone of the claims 2 to 5,
   wherein said solid state light source (31, 32, 33) is a single edge-emitting light emitting diode or a multiplicity of edge-emitting light emitting diodes.

7. Illumination arrangement according to anyone of the claims 2 to 6,
   wherein said solid state light source (31, 32, 33) is a single vertical cavity surface emitting laser device (32) and/or a laser diode or a multiplicity of vertical cavity surface emitting laser devices (32) and/or of laser diodes.

8. Illumination arrangement according to anyone of the claims 2 to 7,
   wherein said solid state light source (31, 32, 33) is a single resonant cavity light emitting diode or a multiplicity of resonant cavity light emitting laser diodes.

9. Illumination arrangement according to anyone of the preceding claims,
   wherein said light integrating device (50) and said at least one associated solid state light source device (30) are disposed in closed spatial proximity or relationship to each other.

10. Illumination arrangement according to anyone of the preceding claims,
    wherein said light integrating device (50) and said at least one associated solid state light source device (30) are disposed in direct mechanical contact to each other.

11. Illumination arrangement according to anyone of the preceding claims,
    wherein said light integrating device (50) and said at least one associated solid state light source device (30) are disposed having a gap structure (G) between them, in particular an air gap (G) or an evacuated gap (G), the gap width of which in particular being small compared to the cross-section of the light integrating device (50) or the light source device (30).

12. Illumination arrangement according to anyone of the preceding claims,

    - wherein said light integrating device (50) has a light incidence aperture (501),
    - wherein said associated solid state light source device (30) has a light emitting aperture (300, 30E), and
    - wherein said light emitting aperture (300, 30E) is less than or equal to said light incidence aperture (501).

13. Illumination arrangement according to anyone of the preceding claims,

- wherein said light valve device (40) has a light incidence or entrance aperture (401),
- wherein said light integrating device (50) has a light output or exit aperture (500, 50E), and
- wherein said light incidence or entrance aperture (401) of said light valve device (40) is less than or equal to said light output or exit aperture (500, 50E) of said light integrating device (50).

14. Illumination arrangement according to anyone of the preceding claims,
    wherein said light integrating device (50) is a light pipe, an integrator rod, or the like.

15. Illumination arrangement according to anyone of the preceding claims,
    wherein said light integrating device (50) is a solid rod, in particular made of an optical transparent material, of plastic, glass, or the like.

16. Illumination arrangement according to anyone of the preceding claims,
    wherein said light integrating device (50) is a hollow tube device having reflecting or mirrored inner walls (50s) or side faces (50s).

17. Illumination arrangement according to anyone of the preceding claims,
    wherein said light integrating device (50) has a square, rectangular, hexagonal, equilateral triangular, oval, or a circular cross-section.

18. Illumination arrangement according to anyone of the preceding claims,
    wherein said light integrating device (50) is or comprises a light mixing device (55) , in particular a beam splitter device (55), a colour cube device (55), or the like.

19. Illumination arrangement according to claim 18,
    wherein said light integrating device (50) comprises a plurality of light incidence or entrance apertures (501) and at least one light output or exit aperture (500, 50E).

Fig. 1

EP 1 418 765 A1

Fig. 2

Fig. 3

Fig. 4A

10,30,33

EP 1 418 765 A1

1

10,30,33

50

RL1

Fig. 4B

Fig. 5

Fig. 6A

EP 1 418 765 A1

Fig. 6B

EP 1 418 765 A1

Fig. 6C

Fig. 7A

Fig. 7B

EP 1 418 765 A1

Fig. 8A

Fig. 8B

EP 1 418 765 A1

EP 1 418 765 A1

Fig. 9

Fig. 10

EP 1 418 765 A1

Fig. 11

Fig. 12

## EUROPEAN SEARCH REPORT

European Patent Office

Application Number

EP 02 02 4962

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 003 064 A (SEIKO EPSON CORP) 24 May 2000 (2000-05-24) * paragraph '0042! - paragraph '0100! * * figures * | 1-5,7-9, 11-18 | H04N9/31 G02B19/00 G02F1/13357 |
| X | PATENT ABSTRACTS OF JAPAN vol. 2002, no. 09, 4 September 2002 (2002-09-04) & JP 2002 133932 A (CASIO COMPUT CO LTD), 10 May 2002 (2002-05-10) * abstract; figures * | 1-5,9, 14,15, 17-19 | |
| X | US 6 220 714 B1 (EGUCHI NAOYA) 24 April 2001 (2001-04-24) * abstract; figures * | 1-5,7,9, 11-13,18 | |
| X | US 2001/048560 A1 (SUGANO YASUYUKI) 6 December 2001 (2001-12-06) * abstract; figures * | 1-5,7,9, 11-13,18 | |
| X | EP 1 024 669 A (AGILENT TECHNOLOGIES INC) 2 August 2000 (2000-08-02) * paragraph '0012! * * paragraph '0017! - paragraph '0019! * * figure 2 * | 1-3,5,7, 9,10, 14-18 | TECHNICAL FIELDS SEARCHED (Int.Cl.7) H04N G02B G02F |
| X | WO 02 03130 A (NEUROK LLC) 10 January 2002 (2002-01-10) * abstract; figures * | 1-5,10, 14,15, 17,18 | |
| X | WO 01 43113 A (KONINKL PHILIPS ELECTRONICS NV) 14 June 2001 (2001-06-14) * page 3, line 26 - line 30 * * figure 2 * | 1-5,9, 10,14, 15,17-19 | |

-/--

The present search report has been drawn up for all claims

| Place of search | Date of completion of the search | Examiner |
|---|---|---|
| THE HAGUE | 12 March 2003 | Ward, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 02 02 4962

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 322 070 A (PHILIPS NV) 28 June 1989 (1989-06-28) * abstract; figures 4,5 * | 1-19 | |
| A | PATENT ABSTRACTS OF JAPAN vol. 1998, no. 10, 31 August 1998 (1998-08-31) & JP 10 123512 A (SANYO ELECTRIC CO LTD), 15 May 1998 (1998-05-15) * abstract; figures * | 1-19 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 12 March 2003 | Ward, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                    EP 02 02 4962

This annex lists the patent family members relating to the patent documents cited in the above–mentioned European search report.
The members are as contained in the European Patent Office EDP file on
The European Patent Office is in no way liable for these particulars which are merely given for the purpose of information.

12–03–2003

| Patent document cited in search report | | Publication date | Patent family member(s) | | Publication date |
|---|---|---|---|---|---|
| EP 1003064 | A | 24–05–2000 | JP | 2000112031 A | 21–04–2000 |
| | | | EP | 1003064 A1 | 24–05–2000 |
| | | | WO | 9963396 A1 | 09–12–1999 |
| JP 2002133932 | A | 10–05–2002 | NONE | | |
| US 6220714 | B1 | 24–04–2001 | CN | 1244277 T | 09–02–2000 |
| | | | WO | 9916040 A1 | 01–04–1999 |
| US 2001048560 | A1 | 06–12–2001 | JP | 2001343706 A | 14–12–2001 |
| | | | CN | 1334487 A | 06–02–2002 |
| EP 1024669 | A | 02–08–2000 | US | 6364487 B1 | 02–04–2002 |
| | | | EP | 1024669 A1 | 02–08–2000 |
| | | | JP | 2000221595 A | 11–08–2000 |
| WO 0203130 | A | 10–01–2002 | AU | 7307801 A | 14–01–2002 |
| | | | AU | 7927601 A | 14–01–2002 |
| | | | WO | 0203295 A1 | 10–01–2002 |
| | | | WO | 0203130 A1 | 10–01–2002 |
| WO 0143113 | A | 14–06–2001 | WO | 0143113 A1 | 14–06–2001 |
| | | | EP | 1159728 A1 | 05–12–2001 |
| EP 0322070 | A | 28–06–1989 | US | 4912614 A | 27–03–1990 |
| | | | DE | 3888493 D1 | 21–04–1994 |
| | | | DE | 3888493 T2 | 22–09–1994 |
| | | | EP | 0322070 A1 | 28–06–1989 |
| | | | JP | 2001888 A | 08–01–1990 |
| | | | KR | 9704239 B1 | 26–03–1997 |
| JP 10123512 2 | A | | NONE | | |

EPO FORM P0459